# FASCICULE DE BREVET EUROPEEN

(11) **EP 1 211 657 B1**
(45) Date de publication et mention de la délivrance du brevet: **17.06.2009**
(21) Numéro de dépôt: 01402765.0
(22) Date de dépôt: 25.10.2001
(51) Int. Cl.: G08G 1/0969, G01C 21/36

(54) **Système de transmission de messages localisés par positionnement global**
System zur Übertragung von positionsabhängigen Informationen
System for transmitting position dependent information

(30) Priorité: 02.11.2000 FR 0014054
(43) Date de publication de la demande: 05.06.2002
(73) Titulaire: Medium SL, La Massana (AD); Prevost, Claude, 28320 Ymeray (FR)
(72) Inventeur: Prevost, Claude, 28320 Ymeray (FR)
(74) Mandataire: Bolinches, Michel Jean-Marie

(56) Documents cités:
- EP-A- 0 756 153
- EP-A- 1 003 017
- FR-A- 2 737 332
- US-A- 5 878 369
- US-A- 5 999 126

## Description

La présente invention se rapporte principalement à un système de transmission de messages localisés, activé à partir d'un positionnement global. L'invention s'applique à la transmission de telles informations dans tout type de moyens de transport connu, en particulier : véhicules automobiles, utilitaires, bus et autocars, trains, aéronefs et autres moyens de transport en commun, etc.

Les systèmes de diffusion localisée d'informations proposent des services et produits locaux accessibles dans les moyens de transport habituels à l'aide de supports classiques : panneaux de diffusion, messages radiophoniques, journaux locaux, etc.

On connaît également des panneaux de diffusion matriciels utilisés notamment pour la diffusion d'informations municipales, recevant par câble les textes à diffuser. Ces dispositifs nécessitent également une infrastructure importante. De plus, la transmission par câble n'est pas compatible avec la communication avec des panneaux de diffusion mobiles, notamment avec des panneaux portés par des véhicules automobiles.

La demande FR-A-95 08948 décrit la mise en oeuvre de stockage de messages dans une mémoire de messages situés à bord d'un véhicule automobile, ce qui limite la diversité des messages à diffuser. De plus, ce système ne prévoit pas la possibilité de mise à jour des messages. Le document EP1003017 décrit un système comprenant toutes les caractéristiques du préambule de la revendication une.

De manière générale, les systèmes existants ne permettent pas d'offrir les services et produits précités de manière sûre, efficace, peu onéreuse, pour tout type de véhicule de transport et apte à couvrir toute étendue territoriale prédéterminée. C'est par conséquent un but de la présente invention d'offrir un tel système de transmission d'informations localisées.

Pour atteindre ce but, l'invention propose, en connexion à la communication de positionnement localisé d'un véhicule, la communication, au moins en mode vocal, d'informations liées à cette localisations

Plus précisément, la présente invention est définie par les revendications.

Selon un mode de réalisation particulier, les messages mémorisés activés sont également de type vidéo et sont associés à au moins un écran récepteur de signaux vidéo. De tels écrans peuvent être disposés dans et/ou sur le véhicule.

Selon une forme de réalisation particulière, le système selon l'invention comporte des moyens de mémorisation des messages permettant de mémoriser les messages par diffusion multiple et simultanée de mêmes données renouvelées à partir d'un téléchargement unique. Une horloge radio - pilotée permet de réaliser un contrôle simultané des messages.

Selon une autre forme de réalisation, le système selon l'invention comporte des moyens de comptage des messages diffusés et de centralisation de comptes-rendus détaillés des conditions de diffusion de ces messages. L'horloge radio - pilotée, reliée au serveur, assure le contrôle des conditions de temps et de durée des messages.

Les messages sont essentiellement stockés dans l'unité, auquel cas les moyens de diffusion des messages et les moyens cartographiques sont asservis aux mêmes signaux de sélection.

Avantageusement, des ondes électromagnétiques, en particulier des ondes radios, sont utilisées pour transmettre les données entre le serveur centralisé et les moyens embarqués dans les véhicules. Les transmissions peuvent être effectuées par téléphone cellulaire avec possibilité de recevoir un même message pour chaque récepteur de chaque véhicule équipé, les divers récepteurs correspondant à un même numéro d'appel, tout au moins pour une étendue géographique donnée.

L'invention sera mieux comprise au moyen de la description détaillée qui suit, en référence aux figures annexées qui représentent respectivement :
- la figure 1, le schéma d'une des unités de réception et de diffusion des messages du système selon l'invention ; et
- la figure 2, un diagramme de flux illustrant une possible hiérarchisation des messages à diffuser.

Le serveur reçoit des instructions concernant les conditions de diffusion des messages. Ces instructions sont traduites en consignes de diffusion et correspondent par exemple aux heures, durées et nombre de passages des messages. Ces consignent diffusent prioritairement des messages qui relèvent de la sécurité ou de l'information routière, et qui sont communiqués au serveur par toute autorité habilitée.

Les instructions et la maquette des messages publicitaires sont fournies au serveur par les agences de publicité, via des liaisons spécialisées ou Internet. De nouveaux messages, ou des modifications, sont également reçus avec leurs consignes de diffusion.

Les consignes sur les messages comportent également une indexation territoriale. Par exemple, une publicité pour un produit de grande consommation sera diffusée au niveau global, une publicité pour un parc d'attractions sera diffusée au niveau régional, alors que la publicité d'un restaurant ou d'un coiffeur ne sera diffusée qu'au niveau local. Des publicités locales différentes sont ainsi diffusées dans des lieux différents. De même, la publicité pour un produit peut être modifiée partiellement pour diffuser localement les coordonnées du distributeur le plus proche.

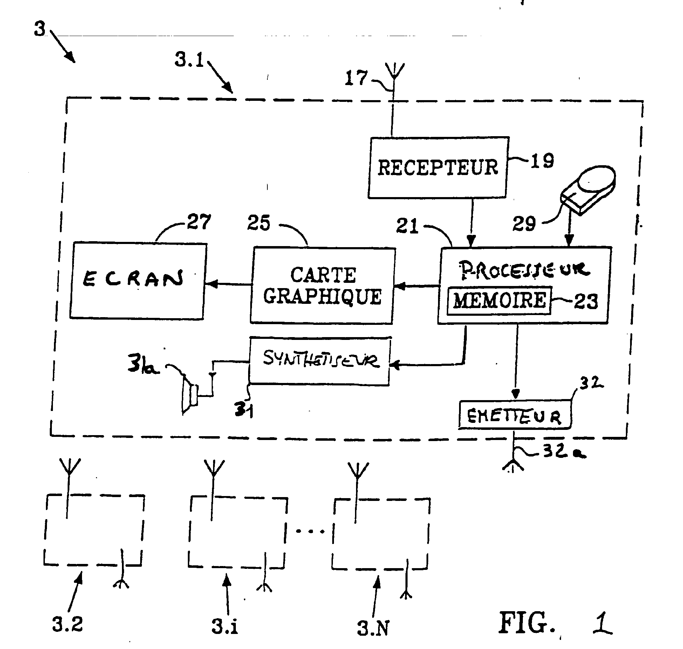

Comme illustré sur la figure 1, le système selon l'invention comporte N unités 3 de réception et de diffusion des messages, référencés 3.1 à 3.N et embarqués dans les véhicules cibles.

Les messages à diffuser dans chaque véhicule sont stockés dans des moyens 9 de mémorisation de messages des unités de réception et diffusion 3.1 à 3.N.

Le serveur transmet les messages à diffuser correspondantes en fonction du positionnement.

Dans l'établissement de comptes-rendus des diffusions effectuées, c'est-à-dire de relevés de compteur, le serveur enregistre dans un compteur de sa mémoire les paramètres de diffusion en temps réel des messages. Les enregistrements permettent de facturer l'annonceur en fonction de paramètres de type durée et date de diffusion dont les données sont incluses dans la consigne de diffusion. D'autres paramètres peuvent être inclus pour permettre de moduler la facturation, tel que le lieu de la diffusion, en fonction des contrats passés avec les annonceurs

Les indications de temps sont fournies par une horloge 10 radio-pilotée et reliée à l'ordinateur du serveur. cette horloge permet de réaliser un contrôle simultané des messages.

L'ordinateur 7 est connecté à des moyens d'émission comportant un modulateur 11 connecté à un émetteur 13, lui-même relié à une antenne d'émission 15. Les données sont par exemple transmises en tant que fichiers informatiques. Le modulateur 11 assure dans cet exemple de réalisation une modulation par impulsions codées en PCM terminologie anglo-saxonne). Toutefois, la transmission analogique pour les images vidéo avec stockage dans des mémoires de trames ne sort pas du cadre de la présente invention.

L'émetteur 13 est, avantageusement, un émetteur d'ondes électromagnétiques, par exemple un émetteur d'ondes radios. Il est également possible d'utiliser des émetteurs dédiés ou des émetteurs de systèmes de téléphonie cellulaire.

Les unités 3 de réception et de diffusion établissent une communication bidirectionnelle avec le serveur. En variante, les unités 3 de réception et de diffusion sont munies de moyens passifs de réception et de décodage de l'information transmise par le serveur.

Avantageusement, lors d'une diffusion générale des messages, toutes les unités de réception et de diffusion 3.1 à 3.N, ou au moins toutes celles qui se trouvent dans une même cellule de transmission, correspondent à un unique numéro d'appel.

Chaque unité de réception et de diffusion 3 comporte une antenne de réception 17 et un récepteur 19 adapté aux signaux émis par l'émetteur 13 par l'intermédiaire de l'antenne 15. Le récepteur 19 est relié à un processeur 21 appelé également « ordinateur de bord », directement ou par l'intermédiaire d'un démodulateur (non représenté). Le processeur 21 stocke les messages dans une mémoire centrale. Le processeur 21 est relié à des moyens de stockage et de lecture cartographiques 25, par exemple sous forme de cédéroms, couplés à des moyens de visualisation 27, par exemple un écran plat à cristaux liquides rétro-éclairés.

L'ordinateur de bord 21 est également connecté à des moyens 29 de détermination des données de position de l'unité de réception et de diffusion, par exemple à un récepteur GPS (initiales de « Global Positioning System »). Ces données de positionnement global sont traduites simultanément par le processeur 21 en signaux de sélection de la carte à visualiser sur l'écran, et de sélection des messages indexés territorialement suivant la localisation géographique.

A cet effet, les unités de réception et de diffusion 3 comportent un émetteur 32 permettant de communiquer au serveur d'émission 1 les signaux de position géographique de l'unité concernée. Le serveur lui transmet, en retour, les messages localisés correspondant à cette position et sélectionnés en fonction des consignes qui s'y rattachent. En option, cet émetteur 32 retransmet également des indications de diffusion concernant les divers messages. Une telle transmission, par exemple quotidienne ou hebdomadaire, permet de valider la facturation de la diffusion de ses messages à l'annonceur.

L'enregistrement des durées et des dates de diffusion des messages, opéré par le serveur, peut être complété par les données sur la localisation de l'unité de réception et de diffusion lors de la diffusion, et par des informations complémentaires indiquant par exemple si le véhicule porteur de l'unité de réception et de diffusion était stationné ou circulait.

Le processeur 21 est couplé à un synthétiseur de la parole 31 relié à au moins un haut-parleur 31a permettant, par synthèse vocale, la transduction des messages numériques mémorisés en messages sonores.

En variante, les messages sonores sont couplés à des signaux vidéo dont la diffusion est coordonnée par l'ordinateur de bord 21 à partir des données de position, des messages indexés et d'enregistrements vidéo réalisés sur des supports adaptés, tels que des DVD (initiales de Digital Versatile Disk, c'est-à-dire Disque numérique multifonctionnel), et diffusés sur des écrans récepteurs dédiés dans le véhicule.

Les messages sont stockés dans une mémoire de masse de l'ordinateur de chaque unité 3, et/ou sur DVD, et sont déclenchés en fonction des consignes de sélection transmises par le serveur. Dans ce mode, l'établissement de comptes-rendus des diffusions effectuées, c'est-à-dire de relevés de compteur, peut être réalisé par l'ordinateur de bord avant d'être transmis au serveur.

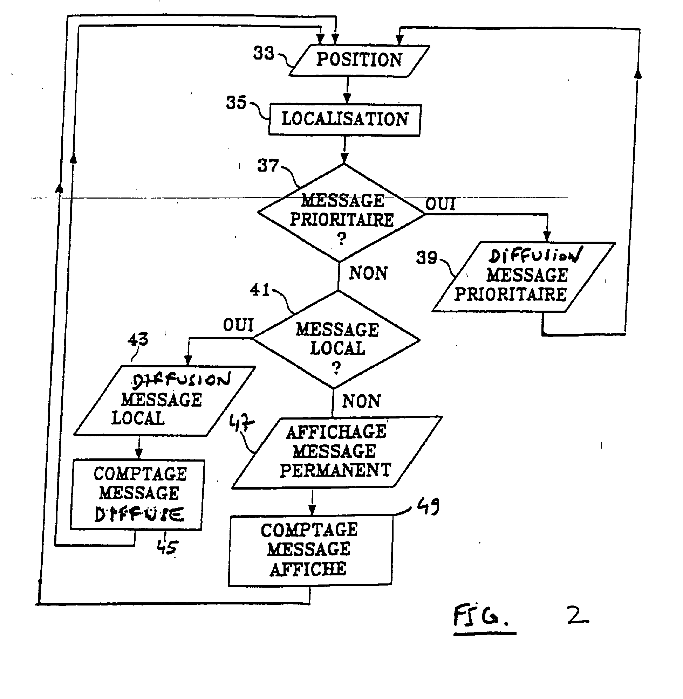

La figure 2 illustre un exemple d'exécution d'instructions de diffusion transmis par le serveur à une unité de diffusion 3.

Dans cet exemple, l'unité 3 diffuse les messages correspondant aux messages locaux au niveau d'un quartier d'une ville ou d'un village, les messages régionaux correspondant à un département ou à une région et les messages globaux correspondant par exemple à la couverture du système selon la présente invention.

La priorité est toujours donnée aux messages qui relèvent de la sécurité routière par rapport aux messages à caractère publicitaire. Ensuite, la priorité est définie par le serveur en fonction des instructions qu'il reçoit.

En l'absence de messages émis, l'unité 3 affiche des messages permanentes préenregistrées correspondant par exemple à une publicité pour le système selon la présente invention.

En 33, l'ordinateur de bord 21 effectue l'acquisition de la position du véhicule à partir des données fournis par le boîtier GPS.

En 35, l'ordinateur de bord 21 détermine la localisation exacte, à environ un mètre près, du véhicule porteur de l'unité de diffusion dans le quartier où il se trouve, à partir des données acquises en 33 et des données cartographiques fournies en 25.

En 37, les messages prioritaires en fonction de la région, de la ville ou du quartier localisés sont identifiés avec leurs consignes par transmission bidirectionnelle avec le serveur.

Si de tels messages sont transmis, ils sont stockés dans la mémoire de l'unité et les messages prioritaires sont diffusés en 39 dans le véhicule par les moyens de diffusion sonore et, si possible visuelle à partir des données cartographiques.

En l'absence de messages prioritaires ou une fois les messages prioritaires diffusés, les messages locaux enregistrés, éventuellement remis à jour par le serveur, sont transmis en fonction de la position du véhicule et des consignes de priorité qui leur sont attachées, par exemple en fonction de l'étendue géographique de la diffusion : local, régional, national et global.

En 41, on vérifie s'il existe un message local à diffuser correspondant à la position du véhicule acquise en 33 et déterminée en 35.

En 43, les messages sont diffusés correspondant par exemple à la publicité sonore et visuelle d'un établissement local, par exemple d'un coiffeur, d'un restaurant, d'un magasin d'équipement ou autre.

En 45, on enregistre dans un compteur, typiquement en mémoire de masse (référencée 23 en figure 1), la diffusion des messages effectués en 43. Les enregistrements permettent de facturer l'annonceur en fonction de paramètres de type durée et date de diffusion, tels que fournies par l'horloge du serveur dont les données sont incluses dans la consigne de diffusion. D'autres paramètres peuvent permettre de moduler la facturation, tel que le lieu de la diffusion, en fonction des contrats passés avec les annonceurs. Puis on retourne en 33.

En 47, en l'absence d'instructions quelconques de diffusion de messages, l'unité 3 diffuse un message permanent stocké dans la mémoire de masse 23 de l'ordinateur 21. Les paramètres de cette diffusion par défaut sont également enregistrés dans un compteur 49.

L'invention n'est pas limitée aux exemples de réalisation décrits et représentés. Avantageusement, le système selon la présente invention utilise pour les communications une bande passante étroite, ce qui en diminue le coût de fonctionnement. Par exemple, les messages sont transmis pendant des durées plusieurs fois supérieures au temps de leur diffusion et ne sont diffusés que lors de la réception d'un ordre de diffusion.

L'acquisition de la position peut être obtenue par tout système de positionnement global connu, par exemple par des systèmes de repérage radar ou autre, moins précis que le GPS. Dans ces conditions, la diffusion des messages sera limitée au niveau régional.

## Revendications

1. Système de transmission des messages localisés à partir d'un positionnement global, comportant au moins un serveur centralisé équipé de moyens de transmission de données à des unités de réception et de diffusion de messages (3, 3.1 à 3.N) embarquées sur des véhicules, ces unités (3) comportant des moyens de positionnement du véhicule (29) qui activent sélectivement, outre des moyens de localisation (25), des moyens de sélection (21, 32) des messages mémorisés en fonction des données de positionnement, **caractérisé en ce que** la diffusion des messages est contrôlée par des consignes prioritaires transmises par le serveur, **en ce que** les messages sont diffusés en mode vocal dans le véhicule mobile par des moyens de synthèse de la parole (31, 31a) à partir des messages mémorisés, et **en ce que** les messages sont stockés sur une mémoire de masse de l'ordinateur (21) et/ou sur DVD de chaque unité (3).

2. Système de transmission des messages localisés selon la revendication 1, dans lequel les messages mémorisés et activés sont également de type vidéo et sont associés à au moins un écran récepteur de signaux vidéo.

3. Système de transmission selon la revendication 1, dans lequel l'établissement de comptes-rendus des diffusions effectuées par des relevés de compteur, est réalisé par l'ordinateur de bord avant d'être transmis au serveur.

4. Système de transmission selon la revendication précédente, dans lequel les enregistrements permettant de facturer l'annonceur en fonction de paramètres de type durée et date de diffusion, tels que fournies par l'horloge du serveur dont les données sont incluses dans la consigne de diffusion.

5. Système de transmission des messages localisés selon l'une quelconque des revendications précédentes, dans lequel chaque unité de réception et de diffusion (3) comporte une antenne de réception (17) et un récepteur (19) adapté aux signaux émis par l'émetteur (13) par l'intermédiaire de l'antenne (15), dans lequel le récepteur (19) est relié à un processeur (21) qui stocke les messages et les consignes de diffusion dans une mémoire (23, 9), et dans lequel le processeur (21) est relié à des moyens de stockage et de lecture cartographiques (25) couplés à des moyens de visualisation (27) et à des moyens (29) de détermination des données de position de l'unité de réception et de diffusion, et dans lequel les données de positionnement fournissent simultanément au processeur (21) des signaux de sélection de la carte à visualiser et de sélection des messages indexés territorialement suivant le positionnement géographique.

6. Système de transmission des messages localisés selon quelconque des revendications précédentes, dans lequel les messages sonores sont couplés à des messages vidéo dont la diffusion est coordonnée par l'ordinateur de bord à partir des données de position, de localisation et d'enregistrements correspondants sur des supports adaptés et diffusés sur des écrans récepteurs dédiés, disposés dans et/ou sur le véhicule.

## Claims

1. System for transmitting localised messages from a global positioning, said system comprising at least one centralised server equipped with means for transmitting data to message-receiving and broadcasting units (3, 3.1 to 3.N) on board vehicles, the said units (3) comprising means (29) for positioning the vehicle which selectively activate, besides localising means (25), means (21, 32) for selecting stored messages according to the positioning data, **characterised in that** the broadcasting of the messages is controlled by priority instructions transmitted by the server, **in that** the messages are broadcast in voice mode in the moving vehicle by speech-synthesis means (31, 31 a) from stored messages, and **in that** the messages are stored in a mass memory of the computer (21) and/or on DVD in each unit (3).

2. System for transmitting localised messages according to claim 1, wherein the stored and activated messages are also of the video type and are associated with at least one screen that receives video signals.

3. Transmitting system according to claim 1, wherein the drawing-up of records of the broadcasts made by meter readings is carried out by the on-board computer before being transmitted to the server.

4. Transmitting system according to the preceding claim, wherein the recordings make it possible to invoice the announcer according to parameters of the duration and date-of-broadcasting type, such as are supplied by the clock of the server, the data from which are included in the broadcasting instruction.

5. System for transmitting localised messages according to any of the preceding claims, wherein each receiving and broadcasting unit (3) comprises a receiving aerial (17) and a receiver (19) which is adapted to the signals emitted by the transmitter (13) via the aerial (15), wherein the receiver (19) is connected to a processor (21) which stores the messages and the broadcasting instructions in a memory (23, 9), and wherein the processor (21) is connected to storage and map-reading means (25) which are coupled to display means (27) and to means (29) for determining the position data of the receiving and broadcasting unit, and wherein the positioning data simultaneously supply the processor (21) with signals for selecting the map to be displayed and for selecting the territorially indexed messages according to the geographical positioning.

6. System for transmitting localised messages according to any of the preceding claims, wherein the audio messages are coupled to video messages, the broadcasting of which is coordinated by the on-board computer from the position data, localising data and data from corresponding recordings on supports which are adapted and broadcast on dedicated receiving screens disposed in and/or on the vehicle.

## Patentansprüche

1. System zur Übertragung von lokalisierten Nachrichten anhand einer globalen Positionsbestimmung mit mindestens einem zentralisierten Server, der mit Mitteln zur Übertragung von Daten zu Einheiten (3, 3.1 bis 3.N) zum Empfang und zur Sendung von Nachrichten, die in Fahrzeuge eingebaut sind, ausgestattet ist, wobei diese Einheiten (3) Mittel (29) zur Positionsbestimmung des Fahrzeugs umfassen, die selektiv neben Lokalisierungsmitteln (25) Mittel (21, 32) zur Auswahl von gespeicherten Nachrichten in Abhängigkeit von den Positionsbestimmungsdaten aktivieren, **dadurch gekennzeichnet, dass** die Sendung der Nachrichten durch Prioritätsanweisungen gesteuert wird, die durch den Server übertragen werden, dass die Nachrichten im Sprachmodus im fahrbaren Fahrzeug durch Sprachsynthesemittel (31, 31 a) anhand gespeicherter Nachrichten gesendet werden und dass die Nachrichten in einem Massenspeicher des Computers (21) und/oder auf einer DVD jeder Einheit (3) gespeichert sind.

2. System zur Übertragung von lokalisierten Nachrichten nach Anspruch 1, in welchem die gespeicherten und aktivierten Nachrichten auch vom Videotyp sind und mindestens einem Videosignal-Empfangsbildschirm zugeordnet sind.

3. System zur Übertragung nach Anspruch 1, in welchem die Erstellung von Berichten der durchgeführten Sendungen durch Zählerablesungen durch den Bordcomputer ausgeführt wird, bevor sie zum Server übertragen werden.

4. System zur Übertragung nach dem vorangehenden Anspruch, in welchem die Aufzeichnungen es ermöglichen, die Ankündigung in Abhängigkeit von Parametern des Typs Sendedauer und Sendedatum, wie durch den Taktgeber des Servers geliefert, in Rechnung zu stellen, dessen Daten in die Sendeanweisung eingeschlossen sind.

5. System zur Übertragung von lokalisierten Nachrichten nach einem der vorangehenden Ansprüche, in welchem jede Empfangs- und Sendeeinheit (3) eine Empfangsantenne (17) und einen Empfänger (19) umfasst, der an die vom Sender (13) durch die Antenne (15) ausgesandten Signale angepasst ist, in welchem der Empfänger (19) mit einem Prozessor (21) verbunden ist, der die Nachrichten und die Sendeanweisungen in einem Speicher (23, 9) speichert, und in welchem der Prozessor (21) mit kartographischen Speicher- und Lesemitteln (25), die mit Visualisierungsmitteln (27) gekoppelt sind, und mit Mitteln (29) zum Bestimmen der Positionsdaten der Empfangs- und Sendeeinheit verbunden ist, und in welchem die Positionsbestimmungsdaten zum Prozessor (21) gleichzeitig Signale zur Auswahl der zu visualisierenden Karte und zur Auswahl der territorial indizierten Nachrichten gemäß der geographischen Positionsbestimmung liefern.

6. System zur Übertragung von lokalisierten Nachrichten nach einem der vorangehenden Ansprüche, in welchem die akustischen Nachrichten mit Videonachrichten gekoppelt sind, deren Sendung durch den Bordcomputer anhand der Daten der Position, der Lokalisierung und von entsprechenden Aufzeichnungen über angepasste Unterstützungen, die auf zweckgebundenen Empfangsbildschirmen gesendet werden, die im und/oder am Fahrzeug angeordnet sind, koordiniert wird.
